Europäisches Patentamt

European Patent Office

Office européen des brevets

(11) Publication number: **0 503 390 A1**

# EUROPEAN PATENT APPLICATION

(21) Application number: **92103373.4**

(51) Int. Cl.⁵: **G06F 13/28**

(22) Date of filing: **27.02.92**

(30) Priority: **27.02.91 JP 31270/91**

(43) Date of publication of application:
**16.09.92 Bulletin 92/38**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Katayose, Tsuyoshi**
**c/o NEC Corporation, 7-1, Shiba 5-chome**
**Minato-ku, Tokyo(JP)**

(74) Representative: **Glawe, Delfs, Moll & Partner**
**Patentanwälte**
**Postfach 26 01 62 Liebherrstrasse 20**
**W-8000 München 26(DE)**

(54) Microcomputer having direct memory access mode.

(57) A microcomputer including a CPU and a DMA controller comprises a transfer number storing circuit, a transfer number updating circuit, a boundary address storing circuit, a DMA transfer address generating circuit, a read detecting circuit, a read address storing circuit, a read address updating circuit, a count circuit, and a count value detecting circuit. A circuit for generating a bus control signal which enables the CPU to perform a memory access is common to a circuit for generating a bus control signal for executing the DMA transfer. Thus, a bus control unit for the CPU is in common to a bus control unit for the DMA controller.

FIGURE 1

## Background of the Invention

### Field of the invention

The present invention relates to a microcomputer including a data transfer controller for performing a data transfer between a memory and a peripheral device in a DMA (direct memory access) mode.

### Description of related art

In many data processing systems using a microcomputer, a large amount of data is transferred between a peripheral device and a memory, and is processed and modified by a central processing unit (called "CPU"), and then, is transferred to another peripheral device or another memory. In this case, if an interrupt is generated from the peripheral device to the CPU and the data transfer is executed in an interrupt routine, an overhead of the CPU (the time for processing the interrupt) is increased, and therefore, data processing efficiency is decreased. In order to avoid this drawback, a direct memory access (called "DMA") controller (abbreviated to "DMAC") has been used as a data transfer controller for exclusively processing the data transfer.

In a conventional practice for the DMA transfer, the CPU sets various control information to the DMA controller in advance, and when a DMA transfer is requested from a peripheral device, a DMA transfer is performed between a predetermined transfer buffer of the peripheral device and the memory.

In the DMA transfer, when the DMA controller detects the DMA request from the peripheral device (for example, a communication control circuit, a printer control circuit, a display control circuit, etc.), the DMA controller requests the CPU to assign a bus control right to the DMA controller.

When the CPU detects this request, the CPU stops a programmed processing being under execution, and transfers the bus control right of an address bus and a data bus to the DMA controller. As a result, the DMA controller utilizes the buses put in an empty condition, and outputs an address information and a read/write control signal, so as to perform a data transfer between the memory and a predetermined transfer buffer (I/O) of the peripheral device which generated the DMA transfer, without intermediary of the CPU.

If the above mentioned DMA transfer operation is repeated so as to complete a necessary number of data transfers, the DMA controller outputs a DMA end signal to the CPU. If the CPU detects the DMA end signal, the CPU accesses the memory in the case that the DMA transfer which has been just completed is a DMA transfer from a peripheral circuit to the memory, and executes a data processing for the data transferred to the memory. On the other hand, in the case that the DMA transfer which has been just completed is a DMA transfer from the memory to the peripheral circuit, the CPU writes data to be next transferred, to the memory.

In the data processing system using the conventional DMA transfer controller operating as mentioned above, if the necessary number of DMA transfers is completed, the CPU executes an interrupt processing for restoring the information saved in the stack to the program counter (PC) and the program status word (PSW), and also executes an interrupt program processing for setting control information for a next DMA transfer. During a period in which these interrupt processing and interrupt program processing are being executed, the DMA controller has to suspend or hold a DMA transfer request generated by a peripheral device. Therefore, a long DMA response holding time is consequently required after generation of the DMA transfer request until the start of an actual execution of the DMA transfer

In addition, at each time the CPU writes the DMA transfer data to the memory, the CPU has to execute a processing in which an write address of the CPU is compared with an end address of the DMA transfer area, and if the write address is beyond the end address of the DMA transfer area, the write address must be returned to a head address of the DMA transfer area. This CPU processing is frequently performed and therefore becomes a substantial load to the CPU. As a result, a considerable time of the CPU is expended for the processing associated with the DMA transfer, and accordingly, an inherent processing of the CPU could not be executed at a high speed.

Furthermore, a bus control unit for an instruction processing is provided internally in the CPU, and in addition, a bus control unit for only the DMA transfer is provided internally in the DMA controller. This is redundant, and has become a problem in a single chip microcomputer requiring a high integration density, since it lowers the efficiency of space or circuit.

### Summary of the Invention

Accordingly, it is an object of the present invention to provide a microcomputer which has overcome the above mentioned defect of the conventional one.

Another object of the present invention is to provide a microcomputer having a DMA controller which can quickly respond to a DMA transfer request from a peripheral device, without holding the DMA transfer request.

The above and other objects of the present invention are achieved in accordance with the present invention by a microcomputer including a central processing unit and a data transfer controller for performing a data transfer between a memory and a peripheral device in a DMA (direct memory access) mode, the microcomputer comprising transfer number storing means for storing the number of DMA transfers, transfer number updating means for updating the number of DMA transfer stored in the transfer number storing means for each time the DMA transfer is executed, boundary address storing means for storing a boundary address of a DMA transfer area to which the DAM transfer is made, DMA transfer address generating means for generating a DMA transfer address at each execution of the DMA transfer, read detecting means for detecting that an address outputted for a read access to the DAM transfer area is a predetermined address, read address storing means for storing an address when data in the DMA transfer area is read out by the read detection means, read address updating means for updating a value of the read address storing means at each time the data is read out from the DMA transfer area, count means incremented with an updating operation of the transfer number updating means and decremented with an updating operation of the read address updating means, and count value detecting means for detecting that a value of the count means becomes a predetermined value, means for generating a bus control signal which enables the central processing unit to perform a memory access being common to means for generating a bus control signal for executing the DMA transfer.

With the above mentioned arrangement, the DMA transfer area can be logically regarded as being a buffer of a ring structure. Therefore, the hardware resources can be effectively utilized, and the microcomputer can have a high economic efficiency.

The above and other objects, features and advantages of the present invention will be apparent from the following description of preferred embodiments of the invention with reference to the accompanying drawings.

Brief Description of the Drawings

Figure 1 is a block diagram of a data processing system including a first embodiment of the microcomputer in accordance with the present invention;
Figure 2 is a block diagram of the CPU included in the microcomputer shown in Figure 1;
Figures 3A and 3B illustrate memory maps in the memory included in the system shown in Figure 1

Figures 4A and 4B are flow charts illustrating an operation of the CPU included in the microcomputer shown in Figure 1;
Figures 5A and 5B are flow charts illustrating an operation of the DMA controller included in the microcomputer shown in Figure 1; and
Figure 6 is a block diagram of a data processing system including a second embodiment of the microcomputer in accordance with the present invention.

Description of the Preferred embodiments

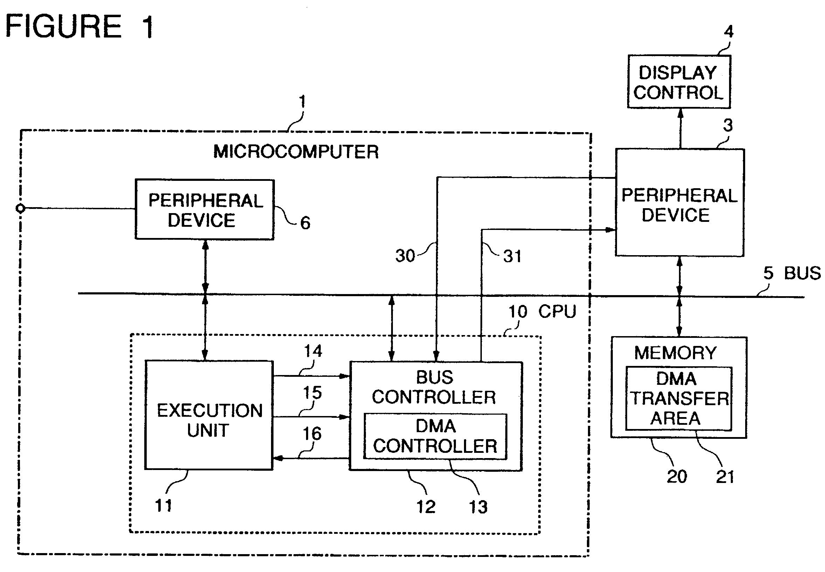

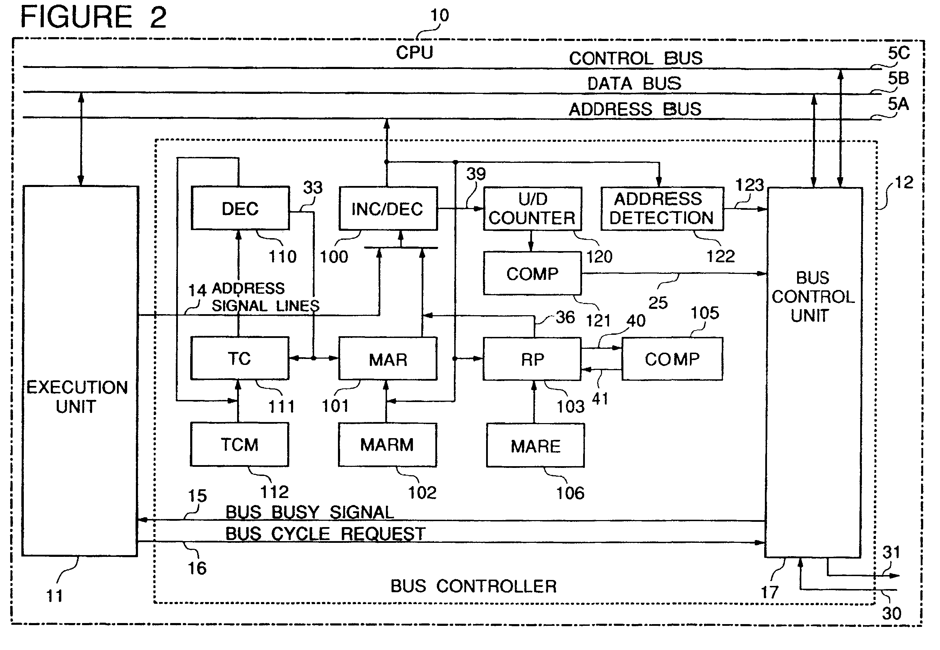

Referring to Figure 1, there is shown a block diagram of a data processing system including a first embodiment of the microcomputer in accordance with the present invention, which includes a microcomputer 1 including therein a bus controller 12 as a data transfer control device. In addition, Figure 2 shows a block diagram of a CPU included in the microcomputer.

The microcomputer 1 comprises therein a CPU 10 and a peripheral device 6 (for example, data transmitting and receiving control circuit). The CPU 10 includes an execution unit 11 containing therein a program counter, program status words, various control registers, etc. (which are not shown since they are well known to persons skilled in the art) for executing various instructions. The CPU 10 also includes a bus controller 12 for controlling a bus interface coupled to an address bus and a data bus and including a read signal, a write signal, etc.

The bus controller 12 included in the CPU 10 controls a bus 5 accompanied by an instruction execution of the execution unit 11, namely, fetches an instruction code, performs an address calculation for a memory access, and starts an access cycle. In addition, the bus controller 12 performs a DMA (direct memory access) transfer so as to execute and control a data transfer processing between a memory 20 and peripheral devices 3 and 6. Namely, the bus controller 12 generates a DMA transfer address, updates the number of transfers, and updates a transfer pointer.

The microcomputer 1 performs a control for the overall data processing system. For example, the microcomputer 1 performs a programmed processing for data which is supplied from an external device (not shown) and is received by the peripheral device 6, and then, writes the result of the programmed processing into a DMA transfer source area 21 within the memory 20.

The peripheral device 3 and 6 include therein a buffer (not shown) for data read/write, and performs a processing inherent to the peripheral device (such as a printing processing, and a display processing) on the basis of the data supplied to the internal buffer by the DMA transfer.

The memory 20 includes a program area and a data area for the CPU 10, and a DMA transfer source area assigned to the DMA transfer, and temporarily stores various data of the data processing system supplied through the bus 5 under control of the CPU 10.

As shown in Figure 2, the bus controller 12 includes a control unit 17 for controlling a read/write of various registers internally included in the bus controller 12, and also for controlling a start of a predetermined bus cycle in response to a bus cycle request signal 16 from the execution unit 16. The bus controller 12 also includes a memory address modulo register MARM 102 for storing a head address information (initial value) of a transfer destination memory area in the case of the DMA transfer, a memory address register MAR 101 for storing a current memory address in the course of execution of the DMA transfer, a terminal counter modulo register TCM 112 for setting the execution number of the DMA transfers (initial value), a terminal counter TC 111 for storing the execution number of the DMA transfers. Furthermore, the bus controller 12 includes a read/write pointer RP 103 for designating a head address of a memory area to be next read out by the CPU 11, an up/down counter (U/D counter) 120 adapted to count up (or increment) at each time of execution of one DMA transfer and also to count down (or decrement) at each time the CPU 10 reads out a content of the read/write pointer 103, a comparison register COMP 121 for comparing a value of the up/down counter 120 with a value set internally in the comparison register 121, so as to generate a coincidence signal 25 when both the values are coincident with each other, an incrementer/decrementer (INC/DEC) 120 for incrementing or decrementing the content of the memory address register 101 or the read/write pointer 103. The bus controller 12 also includes an address detection circuit 122 for generating an address detection signal 123 when an output value (address) of the incrementer/decrementer 120 is consistent with an address indicated by the read/write pointer 103, a second comparison register COMP 105 for comparing the value of the read/write pointer 103 with a value internally set in the comparison register 105 for generating a signal 41 when both the values are coincident with each other, a register MARE 106 for storing the address data to be set into the read/write pointer 103, and a decrementer circuit (DEC) 110 for decrementing the content of the terminal counter 111.

In addition, the bus control unit 17 includes control registers (not shown) for storing control information such as a transfer direction of an address bus 5A, a data bus 5B and a control bus 5C and a read/write buffer, an access timing, etc., and a disable/enable flag (not shown) for the DMA operation. The bus control unit 17 executes an assignment of the control right of the buses 5A, 5B and 5C, a timing control of the DMA transfer, and an updating control of various internal control registers.

When the read/write of the memory becomes necessary for execution of an ordinary instruction by the CPU 10, the execution unit 11 supplies the address information through address signal lines 14 to the bus controller 12, and also, outputs the bus cycle request signal 16 to the bus controller 12 so as to request a bus cycle for either the reading or the writing.

First, operation when data is read out from the memory 20 to the internal register of the execution unit 11 will be described

The bus controller 12 activates the control bus 5C so as to output a read signal to the memory 20, and supplies the address information through the incrementer/decrementer 100 to the address bus 5A. At the same time, the bus controller 12 activates a bus busy signal 16 to bring the execution unit 11 into a wait condition. if data is read out to the data bus 5B from a location of the memory 20 designated by the address on the address bus 5A, the bus controller inactivates the bus busy signal 15 to cancel the wait condition of the execution unit 11. If the bus busy signal 15 is inactivated, the execution unit 11 reads the data on the data bus 5B, and writes it into an internal register of the execution unit 11.

Next, operation when data is written from the internal register of the execution unit 11 to the memory 20 will be described

The execution unit 11 outputs the data read out from the internal register of the execution unit 11 to the data bus 5B, and supplies an address information through the address signal lines 14 to the bus controller 12. The bus controller 12 supplies the address information supplied from the execution unit 11, through the incrementer/decrementer 100 to the address bus 5A. At the same time, the bus controller 12 activates the bus busy signal 16 to bring the execution unit 11 into the wait condition. The execution unit 11 is brought into the wait condition, maintaining the condition of outputting the data of the internal register to the data bus 5B. Succeedingly, the bus controller 12 activates the control bus 5C so as to output a write signal to the memory 20. If the data is written through the data bus 5B to a location of the memory 20 designated by the address on the address bus 5A, the bus controller inactivates the bus busy signal 15 to cancel the wait condition of the execution unit 11. If the bus busy signal 15 is inactivated, the execution unit 11 stops the supplying of the data onto the data bus 5B.

As mentioned above, in execution of an ordinary instruction. a bus cycle requested by the execution unit 11 is started by the bus controller 12, so that the data is read out from a designated address of the memory 20 or the data is written into a designated address of the memory 20. In addition, an instruction code fetching, namely, the reading from the memory 20 of an instruction for execution of a program by the execution unit is performed similarly to the above operation.

For avoiding complication of the drawings,.control signal lines for data read/write between internal registers of the bus controller 12 are omitted.

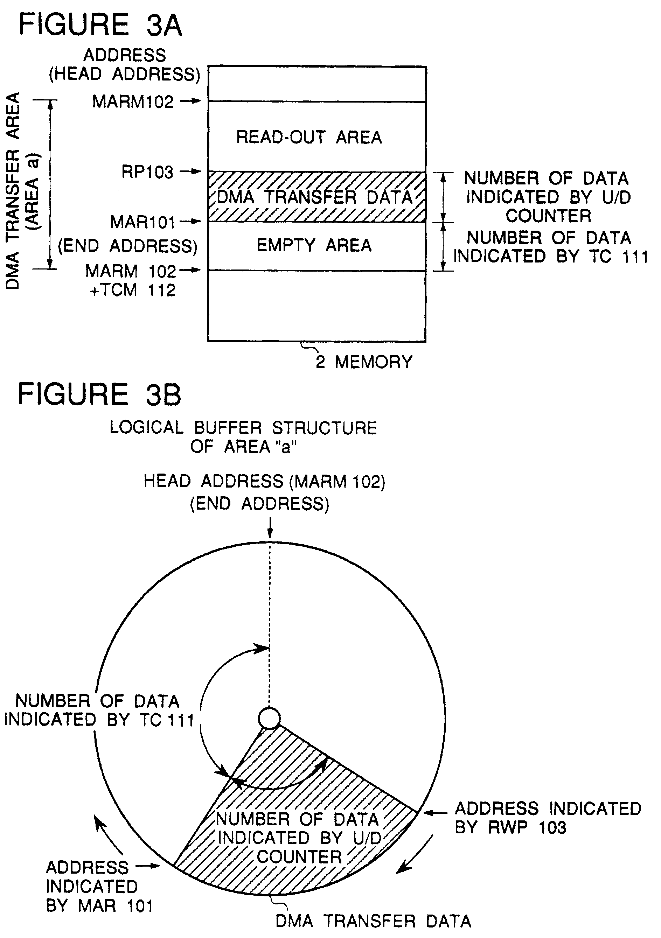

Now, a DMA operation of the shown embodiment will be described, assuming that in response to a DMA request from the peripheral device 3, data is transferred in the DMA mode from the peripheral device 3 to a DMA transfer area of the memory 20 shown in Figure 3A.

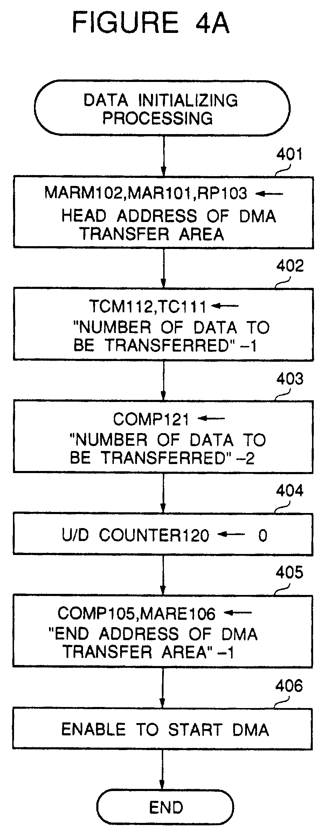

First, a software processing of the CPU 10 will be explained. Prior to the DMA transfer processing, the CPU 10 initializes the DMA control register in a programmed operation as shown in the flow chart of Figure 4A. Namely, the CPU 10 sets the MARM 102, the MAR 101 and the RP 103 with a head address of a DMA transfer destination memory area (area "a") (Step 401).

The TC 111 and the TM 112 are set with {the number of data items of the area "a" - 1} (Step 402). Here, in the case of transferring data with units of a byte, "the number of data items of the area "a" corresponds to the number of bytes from the head address to an end address of the area "a". The COMP 121 is set with {the number of data items of the area "a" - $\alpha$} (Step 403). Here, $\alpha$ is an integer from 0 to several. In addition, the up/down counter 120 is initialized to "0" (zero) (Step 404). The COMP 105 and the MARE 106 are set with {the end address of the DMA transfer area - 1} (Step 405). Thereafter, an enable flag in bus control unit 17 is set to enable the DMA operation (Step 406). Here, the bus control unit 17 has a hardware means exclusively used for ceaselessly checking generation of the bus cycle request signal 15 from the execution unit 11.

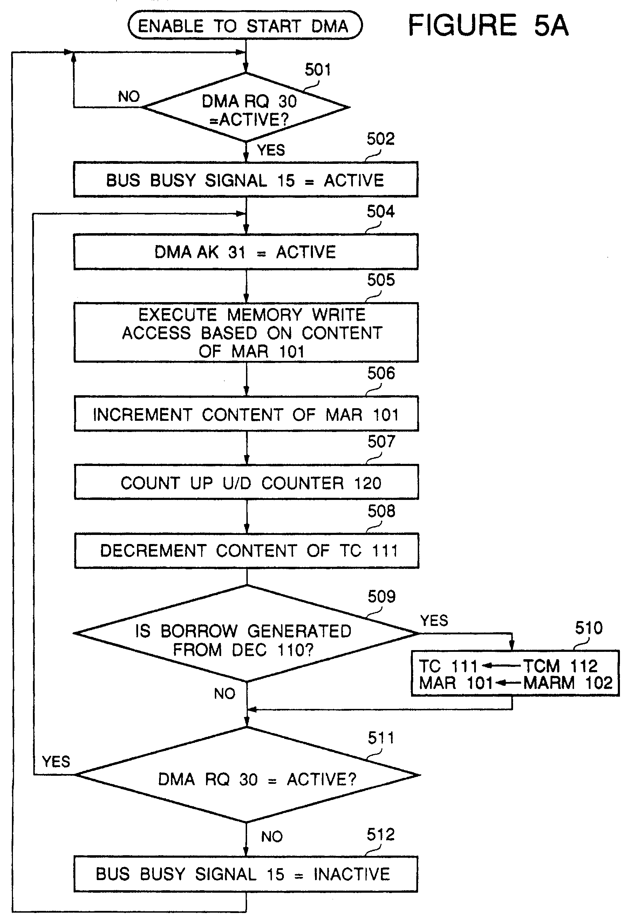

On the other hand, the peripheral device 3 outputs a DMA request signal 30 to the microcomputer 1 if a DMA request factor (for example, completion of a data receiving operation) occurs. In response to the DMA request signal 30, the microcomputer 1 operates in accordance with the flow chart of Figure 5A. Namely, if the DMA request signal 30 is supplied from the peripheral device 3 to the microcomputer 1 (Step 501), the bus control unit 17 activates the bus busy signal 15 so as to inform the execution unit that the bus cycle required for the program execution cannot be started (502).

When the bus busy signal 15 is active, if the programmed processing under execution requires no access to the memory 20, the execution unit 11 continues its processing. However, it becomes necessary to access the memory 20, the execution unit 11 enters in the wait condition by stopping the programmed processing while holding the contents of the program counter, the program status words and various registers. When the DMA transfer is completed and the bus busy signal 15 is inactivated, the execution unit 11 cancels the wait condition, and restarts the stopped programmed processing so as to activate the bus cycle request signal 16 for the purpose of requesting a memory read/write bus cycle.

Succeedingly, the bus control unit 7 outputs a DMA acknowledge signal (DMA AK) 31 to the peripheral device 3 so as to cause the peripheral device 3 to read out the transfer data onto the data bus 5B (Step 504).

At the same time, the content of the MAR 101 is outputted to the address bus 5A, so that the data write access is executed through the data bus 5B (Step 505). Namely, the data to be transferred read out from the peripheral device 3 is transferred and written through the data bus 5B to the memory 20. At each time one DMA transfer operation has been completed, the content of MAR 101 is read out through the signal lines to the incrementer/decrementer 100, and written back to the MAR 101 after it is incremented by "1" (Step 506). In addition, the content of the up/down counter 120 is counted up by "1" by the incrementer/decrementer 100 (Step 507). The content of the TC 111 is read out to the decrementer 110, and then, is written back through the signal lines to TC 111 after it is decremented by "1" (Step 508). At this time, if the DMA transfer of the transfer number set in the TC 111 has been executed and a borrow is generated as the result of the decrement of the TC 111 by the decrementer 110 (Step 509), a borrow signal 33 is generated, so that the contents of the MARM 102 and the TCM 112 are loaded to the MAR 101 and the TC 111, respectively (Step 510). Accordingly, thereafter, if the DMA request signal 30 is generated from the peripheral device 30 and the DMA transfer is executed, the DMA transfer is performed from the head address of the area "a" of the memory 20. Namely, the area "a" can be treated as being a ring structure.

Succeedingly, the bus control unit 17 discriminates whether or not the DMA request signal 30 from the peripheral device is active (Step 511). If the DMA request signal 30 is not active, the bus busy signal 15 is inactivated (Step 512) so as to inform the CPU 10 that the bus access becomes possible. With this, the operation returns to the step 501, and the DMA transfer operation is completed. If the DMA request signal 30 is active, the operation returns to the Step 504, and the above mentioned DMA operation is repeated.

If the bus access becomes possible, since the execution unit 11 is in the wait condition in which all of the program counter, the program status words and the various registers of the execution unit 11 hold the just preceding values, the execution unit can immediately restart the stopped programmed processing.

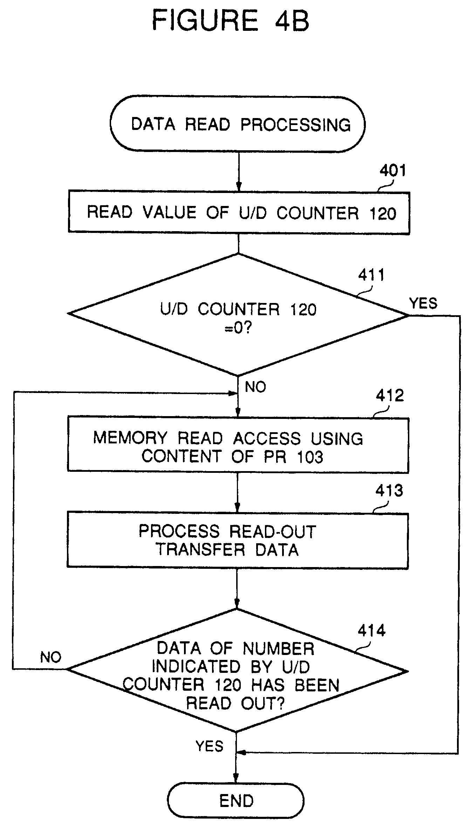

In the shown embodiment, the CPU 10 can easily read the DMA transfer data from the area "a" of the memory 20 before the borrow signal 33 generated by the decrementer 110 is detected. A programmed operation for this purpose is illustrated in the flow chart of Figure 4B.

Namely, the CPU 10 read the content of the up/down counter 120 (Step 410), and knows the number of data items which have been transferred to the memory in the DMA mode (Step 411). If the content of the up/down counter 120 is not "0" (zero), it shows that the DMA transfer has been performed one time or more. At this time, the content of the RP 103 is read out so that the CPU 10 obtains the head address of the memory 30 storing the DMA transfer data. For example, if the reading of the RP 103 is at a first time after the DMA register is initialized, the RP 103 stores the head address of the area "a".

The execution unit 11 executes a specialized instruction so as to perform an indirect addressing of the memory 20 by using the content of the RP 103 as an address, and to read out the data which has been transferred to the memory in the DMA mode (Step 412). With this specialized instruction, the execution unit 11 first causes the address information of the RP 103 to be transferred through the address signal lines and the incrementer/decrementer 100 to the address bus 5A. The address detection circuit 122 detects that the address outputted from the incrementer/decrementer 100 indicates the RP 103, and outputs a detection signal 123 to the bus control unit 17. In response to the detection signal 123, the bus control unit 17 activates the bus busy signal 16 so as to bring the execution unit 11 into a wait condition. Succeedingly, at a next bus cycle, the content of the RP 103 is outputted to the address bus 5A through the data lines 37 and the incrementer/decrementer 100, and at the same time, the control bus 5C is activated so as to supply the read signal to the memory 20, so that the data is read out from the memory 20 to the data bus 5B. If the data is transferred to the data bus 5B, the bus control unit 17 inactivates the bus busy signal 16 so as to cancel the wait condition of the execution unit, so that the data on the data bus 5B is written into an internal register of the execution unit. And, a predetermined processing is executed to the DMA transfer data, and the processed data is transferred to the display control circuit 4 (Step 413).

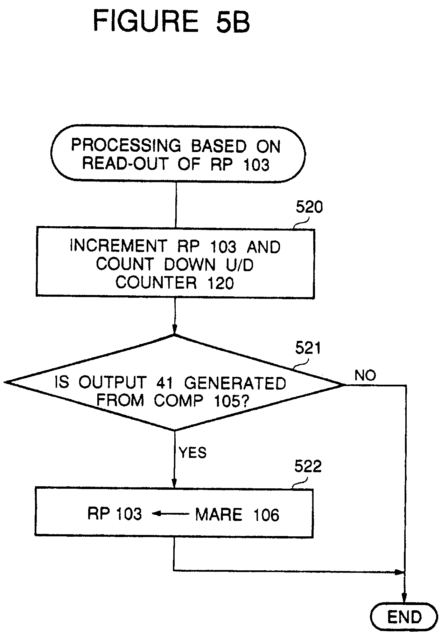

On the other hand, with execution of a specialized instruction in the execution unit 11, a processing illustrated in the flow chart of Figure 5B is executed at each time the data of the memory designated by the content of the RP 103 is read out and written into the internal register of the execution unit 11. Namely, the bus control unit 17 causes the content of the RP 103 to be outputted to data lines 36, and causes the outputted value to be incremented by the incrementer/decrementer 100 so that the result of the increment is written back to the RP 103 through the data lines 37. This updating of the RP 103 is performed similarly to the updating of the content of the MAR 101 performed at the time of execution of the DMA transfer. For example, if the content of the MAR 101 is incremented by "1" at each one DMA transfer operation, the content of the RP 103 is incremented by "1" at each time the RP 103 is read out by the execution unit in the instruction processing.

The incrementer/decrementer 100 also generates a signal 39 to the up/down counter 120 so as to cause it to count down by "1". The content of the RP 103 is monitored by the COMP 105 through data lines 40, and when the content of the RP 103 indicates {the end address of the area "a" - 1}, the COMP 105 generates a signal 41 (Step 521) and the content of the MARE 106 is written to the RP 103 (Step 552). The up/down counter 120 is caused to count dawn by "1" at each time the CPU reads out the RP 103, and also caused to count up by "1" at each time the DMA transfer is executed. Therefore, the content of the up/down counter 120 indicates the number of the DMA transferred data items which have not yet been read out by the execution unit, and the content of the RP 103 indicates the head address of the DMA transferred data which should be next read out.

Returning to Figure 4B, the CPU 10 repeats the programmed processing until the content of the up/down counter 120 becomes "0" (zero) (Step 414), so that a predetermined processing will has been completed for the DMA transferred data written into the area "a".

The content of the up/down counter 120 is monitored by the COMP 121, which is previously set by a program operation with {"the number of data items of the DMA transfer area (area "a") - $\alpha$} where $\alpha$ is an integer from "0" to several. If the DMA transfer is executed and the content of the up/down counter 120 becomes consistent with the value set in the COMP 121, the COMP 121 generates a coincidence signal 25 to the bus control unit 17. In response to the coincidence signal 25, the bus control unit 17 generates a DMA interrupt for requesting the fetching of the DMA transfer data. The generation of the DMA interrupt means that the DMA area is filled with the DMA transferred data which has not yet been received by the CPU 10. Therefore, if it is left as it is, the content of the area "a" will be overwritten with a next occurring DMA transfer. Therefore, the CPU 10 immediately executes the data reading by an interrupt processing program. Incidentally, considering a delay in the acknowledge of the DMA interrupt by the CPU 10, the COMP 121 is preferably set with a value which is smaller than the maximum number of data items stored in the area "a" by several words.

As mentioned above, in the microcomputer 1 including therein the embodiment of the DMAC controller, with only one initialization of the DMA controller by the CPU, the DMA transfer can be performed by repeatedly using the same DMA transfer area of the memory used for the DMA transfer. In addition, by using the RP 103 exclusively used for the DMA transfer area and the up/down counter 120 which is automatically counted up at each time the DMA transfer is executed and also automatically counted down at each time the CPU reads out data from the DMA transfer area by the RP 103, the memory area used as the DMA transfer buffer can be logically treated as a buffer of a ring structure by the CPU 10 as shown in Figure 3A. Therefore, the CPU can read the content of the DMA transfer buffer at any timing so as to execute a necessary data processing.

The bus control for the instruction reading and execution for the CPU 10 and the bus control for the DMA transfer control can be performed by a single common bus control unit 12. Therefore, the hardware resource can be effectively used.

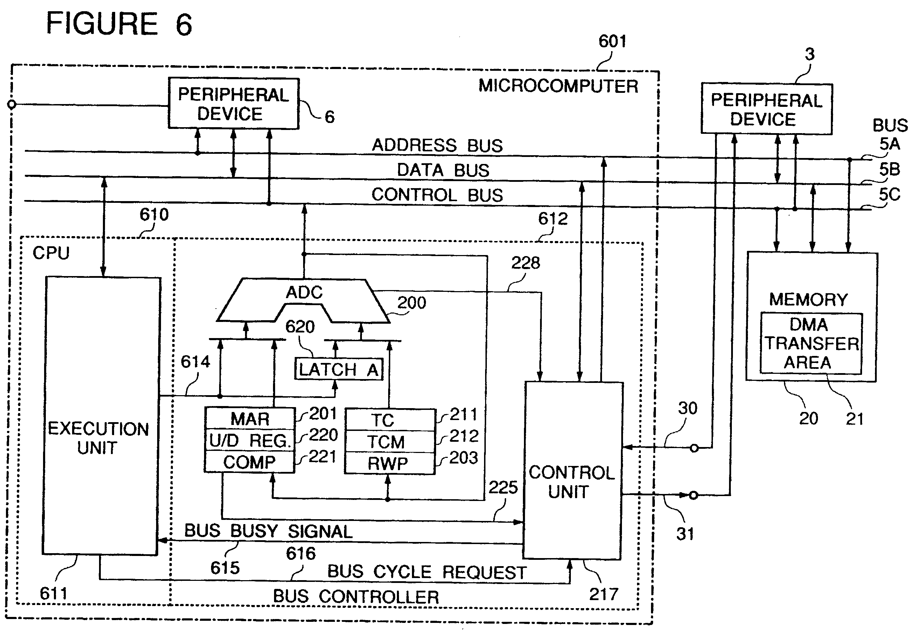

Referring to Figure 6, there is shown a a block diagram of a data processing system including a second embodiment of the microcomputer in accordance with the present invention.

The second embodiment is different from the first embodiment in a system bus control means internally provided in the CPU, namely in means for fetching of an instruction code, calculation of an address for the memory access, generation of the DMA transfer address, updating of the number of data transfers, and updating of the transfer pointer. In Figure 6, elements similar to those shown in Figures 1 and 2 are given the same Reference Numerals, and explanation thereof will be omitted.

A CPU 620 of the second embodiment includes an execution unit 611 for execution of instructions and a bus controller 612 for controlling a bus interface.

The bus controller 612 comprises an arithmetic operation unit 200 for performing an address calculation for the fetching of an instruction code and the memory access (abbreviated to "ADC" hereinafter), a memory address register (MAR) 201 for storing {the end address of the DMA transfer source area 21 + 1}, a terminal counter (TC) 211 for storing the current execution number of the DMA transfers, a terminal counter modulo register (TCM) 212 for setting the execution number of the DMA transfers (initial value), a read/write pointer (RP) 203 for designating a head address of a memory area to be next read out by the CPU 610, an up/down register 220 for storing the number of data items which can be stored in an empty area of the DMA transfer area 21, a comparison register (COMP) 221 storing a value to be compared with a value of the up/down register 220 and generating a coincidence signal 225 when both the values are coincident with each other. The bus controller 612 operates a control unit 217 configured to control the bus cycle, to control the memory control signal, and also to control an internal circuit of the bus controller itself. In addition, an internal bus 614 is provided for transferring data giving a base for the address calculation (for example, an offset and a segment) from the execution unit 611 to the bus controller 612.

Now, operation of the respective units will be described. Here, since the MAR 201, the TC 211, the TCM 212, and the COMP 221 operates similarly to corresponding units of the first embodiment, and therefore, explanation thereof will be omitted.

The bus controller 612 reads from the memory 20 an instruction program for an instruction execution operation of the CPU 610 and accesses to a location of the memory 20 described in the program. If the execution unit 611 supplies the offset and the segment for memory reference through the internal bus 612 to the bus controller 612, and also outputs a bus cycle request signal 616 to the bus controller 612 for the reading or the writing of the memory, the ADC 200 of the bus controller 612 adds the offset and the segment so as to calculate an address and the bus controller executes the memory access.

First, operation when data is read out from the memory 20 to the internal register of the execution unit 611 will be described

In response to the bus cycle request signal 616, the bus controller 612 causes to a latch 620 to latch the segment information supplied through the internal bus 614 from, the execution unit 611, and causes the ADC 200 to add the content of the latch 620 with the offset information succcedingly supplied through the internal bus 614 from the execution unit 611. The result of the addition is supplied to the address bus 5A. At the same time, the bus controller 612 activates a bus busy signal 615 to bring the execution unit 611 into a wait condition. In addition, the bus controller 612 activates the control bus 5C so as to supply a read signal to the memory 20. If data is read out to the data bus 5B from a location of the memory 20 designated by the address on the address bus 5A, the bus controller 612 inactivates the bus busy signal 615 to cancel the wait condition of the execution unit 11. If the bus busy signal 615 is inactivated, the execution unit 611 reads the data on the data bus 5B, and writes it into an internal register of the execution unit 11.

Next, operation when data is written from the internal register of the execution unit 611 to the memory 20 will be described

The execution unit 611 outputs the data read out from the internal register of the execution unit 611 to the data bus 5B, and also outputs the bus cycle request signal 616 to the bus controller 612, The bus controller 612 causes to a latch 620 to latch the segment information of an address to be written supplied through the internal bus 614, and causes the ADC 200 to add the content of the latch 620 with the offset information succeedingly supplied through the internal bus 614 from the execution unit 611. The result of the addition is supplied to the address bus 5A. At the same time, the bus controller 612 activates the control bus 5C so as to supply a write signal to the memory 20, and the bus controller 612 activates a bus busy signal 615 to bring the execution unit 611 into a wait condition, maintaining the condition of outputting the data of the internal register to the data bus 5B. Succeedingly, the bus controller 12 activates the control bus 5C so as to output a write signal to the memory 20. If the data is written through the data bus 5B to a location of the memory 20 designated by the address on the address bus 5A, the bus controller 612 inactivates the bus busy signal 615 to cancel the wait condition of the execution unit 11. If the bus busy signal 615 is inactivated, the execution unit 611 stops the supplying of the data onto the data bus 5B.

As mentioned above, in execution of an ordinary instruction, a bus cycle requested by the execution unit 611 is started by the bus controller 612, so that the data is read out from a designated address of the memory 20 or the data is written into a designated address of the memory 20. In addition, an instruction code fetching, namely, the reading from the memory 20 of an instruction for execution of a program by the execution unit is performed similarly to the above operation. Incidentally, for avoiding complication of the drawings,.control signal lines for data read/write between internal registers of the bus controller 612 are omitted.

In addition, if the peripheral device 3 activates the DMA transfer request signal 30, the bus controller 612 performs the DMA transfer control.

Differently from the up/down counter 120, the up/down register 220 does not perform the count-up and count-down operation. The up/down register 220 is a simple register for merely storing the result of the count-up/count-down operation.

As mentioned above, the ADC 200 is a unit for performing the address calculation. If the execution unit 611 supplies the offset and the segment for the memory reference through the bus 614 to the bus controller 612, the ADC 200 adds the offset and the segment for calculating the address for the memory access.

When an instruction code is fetched, the ADC 200 increments a value of a register (not shown) for storing the instruction code fetch address at each execution of the instruction code fetching.

Furthermore, the ADC 200 has a function of detecting that the address value for the memory reference is consistent with the value of the RWP 203, and of activating a coincidence signal 228 when both the values are coincident.

In additions the ADC 200 also performs the addition and subtraction of the MAR 201 and the TC 211, the decrement of the TC 211, the count-up/count-down operation of the up/down register 220, and the updating of the RWP 203, which are required for performing the DMA transfer.

When the RWP 203 has been updated, the ADC succeedingly compares the value of the MAR 201 with the value of the RWP 203 by subtracting the value of the MAR 201 by the value of the RWP 203, and if both the values are coincident with each other, the ADC 200 activates the coincidence signal 228.

The control unit 217 performs an ordinary memory reference control when the execution unit 611 supplies the offset and the segment to the bus controller 612, and also performs the control of the DMA transfer when the DMA transfer request signal 30 is activated.

Now, operation when the data is transferred from the memory 20 to the peripheral device 3 will be described in detail. Here, since the software processing of the CPU is the same as that of the first embodiment, the explanation thereof will be omitted.

When the execution unit 611 performs an ordinary memory reference instruction, if the ADC 200 activates the coincidence signal 228, the control unit 217 merely controls the memory reference to the RWP 203. However, when the execution unit executes the input/output operation instruction, if the ADC 200 activates the coincidence signal 228, the control unit 217 outputs the content of the RWP 203 to the address bus 5A as the address information for controlling the memory reference.

First, operation will be described on the case in which the execution unit 611 executes the input/output operation instruction and writes data into the memory by using the RWP 203.

If the CPU 610 executes the input/output operation instruction, the execution unit 611 supplies the offset and the segment for the address information of the RWP 203 to the bus controller 612 through the bus 614. If the ADC 200 detects that the address generated by the ADC 200 is coincident with the value of the RWP 203, the ADC 200 activates the coincidence signal 228, so as to cause the control unit 217 to perform the memory reference control using the RWP 203. In response to the activated coincidence signal 228, the control unit 217 activate the bus busy signal 615 so as to bring the execution unit 611 into a wait condition. At the same time, the control unit 217 outputs the value of the RWP 203 through the ADC 200 to the address bus 5A as the address information, and activates the control bus 5C so as to output the write signal to the memory 20 so that the data to be written outputted from the execution unit 611 is written to a corresponding address of the memory 20. Thereafter, the control unit 217 inactivates the bus busy signal 615 so as to cancel the wait condition of the execution unit 611.

Next, operation will be described on the case in which the execution unit 611 executes the input/output operation instruction and reads data into from the memory by using the RWP 203.

If the CPU 610 executes the input/output operation instruction, the execution unit 611 supplies the offset and the segment for the address information of the RWP 203 to the bus controller 612 through the bus 614. If the ADC 200 detects that the address generated by the ADC 200 is coincident with the value of the RWP 203, the ADC 200 activates the coincidence signal 228, so as to cause the control unit 217 to perform the memory reference control using the RWP 203. In response to the activated coincidence signal 228, the control unit 217 activate the bus busy signal 615 so as to bring the execution unit 611 into a wait condition. At the same time, the control unit 217 outputs the value of the RWP 203 through the ADC 200 to the address bus 5A as the address information, and activates the control bus 5C so as to read the memory 20 so that the data is read out to the data bus 5B. Thereafter, the control unit 217 inactivates the bus busy signal 615 so as to cancel the wait condition of the execution unit 611. The execution unit 611 released from the wait condition write the data read out from the memory 20, into the internal register of the execution unit 611.

Here, the operation of the pointers and the counters when the bus controller 612 writes the data into the memory 20 by execution of the input/output operation instruction will be explained.

At each time the data is written into the memory 20 by using the value of the RWP 203 as the address information, the bus controller 612 decrements the value of the up/down register 220 by action of the ADC 200 and increments the value of the RWP 203 by action of the ADC 200.

Following this operation, the ADC 200 compares the MAR 201 with the RWP 203 by subtracting the value of the MAR 201 from the value of the RWP 203. If the value of the RWP 203 is consistent with the value of the MAR 201, the ADC activates the coincidence signal 228, and subtracts the value of the TCM 212 from the value of the MAR 201 so as to write the result of the subtraction to the RWP 203. With this, the RWP 203 is updated to the head address of the DMA transfer source area 21.

Now, the DMA transfer operation from the DMA transfer source area 21 to the peripheral device 3 under control of the bus controller 612 will be described.

If the DMA request factor occurs in the peripheral device 3, the peripheral device 3 activates the DMA transfer request signal 30 to the bus controller 612. In response to the activated DMA transfer request signal 30, the bus controller 612 discriminates whether or not the degree of priority of the memory access of the requested DMA transfer operation is higher than that of the bus control operation of the CPU, and if it is judged to be higher, the bus controller 612 goes to execute the DMA transfer.

In the DMA transfer of transferring data from the memory 20 to the peripheral device 3, the bus controller subtracts the value of the TC 211 from the value of the MAR 201 by action of the ADC 200 so as to generate an address information, and outputs the generated address information to the bus 5 so as to read out the transfer data from the DMA transfer source area 21 to the data bus 5B, and also outputs an acknowledge signal 31 to the peripheral device 3. In response to the acknowledge signal 31, the peripheral device 3 reads or fetches the transfer data.

At each time execution of one DMA transfer is completed, the content of the TC 211 is read out to the ADC 200 and decremented by the ADC 200 so that the decremented value is written back to the TC 211. With this operation, the DMA transfer address generated by subtracting the value of the TC 211 from the value of the MAR 201 is updated or incremented one by one In addition, at each time execution of one DMA transfer is completed, the content of the up/down register 220 is incremented by "1" by action of the ADC 200 and then written back to the up/down register 220.

During a period in which the DMA transfer request signal 30 outputted from the peripheral device 3 is active, the above mentioned DMA transfer operation is repeated. If the DMA transfer request signal 30 outputted from the peripheral device 3 is inactivated, the bus controller 612 terminates the DMA transfer, and performs the memory access or the instruction code fetching associated with the ordinary instruction execution.

If the above mentioned DMA transfer is repeatedly executed and the value of the TC becomes "0" (zero), it means that the DMA transfers of the number set in the TC 211 has been executed, and the bus controller 612 loads the content of the TCM 212 to the TC 211. Thereafter, if the peripheral device 3 generates the DMA transfer request signal 30 and the DMA transfer is executed, the DMA transfer is started from the head address of the DMA transfer source area 21 of the memory 20.

Thus, the DMA transfer can be performed by repeatedly using the DMA transfer source area 21.

Next, operation of the COMP 221 will be described. Prior to the DMA transfer, the COMP 221 is previously set by a programmed operation with {the number of data items in the DMA transfer source area 21 - $\alpha$}. In the course of execution of the DMA transfer, if the up/down register is incremented and becomes consistent with the value of the COMP 221, the COMP 221 activates a coincidence signal 225 to the control unit 217. This coincidence signal 225 means that data to be transferred in the DMA mode does not remain in the DMA transfer source area 21.

In response to the activated coincidence signal 225, the control unit 217 requests the DMA interrupt to the execution unit 611, and the CPU 610 performs the DMA interrupt processing. With this DMA interrupt processing, the data is written into the DMA transfer source area 21 at a high speed unless the DMA transfer is inhibited or until the value of the up/down counter 220 becomes smaller than the value of the COMP 221 (Figure 4).

Incidentally, "$\alpha$" is set to an integer of zero to several, for the purpose of preventing the data that has not yet been processed by the CPU, from being transferred in the DMA transfer mode in a delay period after the COMP 221 detects the coincidence until the DMA transfer is inhibited or until the data is written by the CPU.

As will be apparent from the above description, in the microcomputer including therein the DMAC controller in accordance with the present invention, when the DMA transfers of the set transfer number has been completed, the control information for the next DMA transfer is automatically set. Therefore, it becomes unnecessary to perform the setting of the control information by using the CPU. Accordingly, it is also becomes unnecessary to hold the DMA transfer request, and therefore, it is possible to quickly respond to the DMA transfer request form the peripheral device.

In addition, by using the special write pointer which is automatically updated at each time the data is written into the DMA transfer source area and which is also automatically set with the head address information of the DMA transfer source area when it exceeds the DMA transfer source area, and the up/down register which is automatically counted down at each time the CPU performs the data writing and which is also automatically counted up at each time the DMA transfer is executed, the memory area used as the DMA transfer buffer can be logically treated as a buffer of a ring structure by the CPU. Therefore, the CPU can write the data by only executing the input/output operation instruction without performing the write address control. Operability of the CPU is very excellent, and the processing capability of the overall system is greatly increased.

The bus control for the instruction reading and execution for the CPU and the bus control for the DMA transfer control can be performed by a single common bus control unit. Therefore, the chip area of the microcomputer can be decreased.

In the second embodiment, the address generation means for the CPU and the address generation means for the DMA transfer are realized by utilizing a common hardware. Therefore, the economic microcomputer can be obtained.

The invention has thus been shown and described with reference to the specific embodiments. However, it should be noted that the present invention is in no way limited to the details of the illustrated structures but changes and modifications may be made within the scope of the appended claims.

**Claims**

1. A microcomputer including a central processing unit and a data transfer controller for performing a data transfer between a memory and a peripheral device in a DMA (direct memory access) mode, the microcomputer comprising transfer number storing means for storing the number of DMA transfers, transfer number updating means for updating the number of DMA transfer stored in said transfer number storing means for each time the DMA transfer is executed, boundary address storing means for storing a boundary address of a DMA transfer area to which the DAM transfer is made, DMA transfer address generating means for generating a DMA transfer address at each execution of the DMA transfer, read detecting means for detecting that an address outputted for a read access to said DAM transfer area is a predetermined address, read address storing means for storing an address when data in said DMA transfer area is read out by said read detection means, read address updating means for updating a value of said read address storing means at each time the data is read out from said DMA transfer area, count means incremented with an updating operation of said transfer number updating means and decremented with an updating operation of said read address updating means, and count value detecting means for detecting that a value of said count means becomes a predetermined value, means for generating a bus control signal which enables said central processing unit to perform a memory access being common to means for generating a bus control signal for executing the DMA transfer.

2. A microcomputer claimed in Claim 1 wherein address generating means for generating an address for enabling said central processing unit to perform the memory access is common to said DMA transfer address generating means, said transfer number updating means, a write address updating means and said count value detecting means.

# FIGURE 1

EP 0 503 390 A1

# FIGURE 2

EP 0 503 390 A1

# FIGURE 3A

ADDRESS
(HEAD ADDRESS)

MARM102 →

READ-OUT AREA

RP103 →

DMA TRANSFER DATA

MAR101 →
(END ADDRESS)

EMPTY AREA

MARM 102 →
+TCM 112

DMA TRANSFER AREA
(AREA a)

NUMBER OF DATA
INDICATED BY U/D
COUNTER

NUMBER OF DATA
INDICATED BY TC 111

2 MEMORY

# FIGURE 3B

LOGICAL BUFFER STRUCTURE
OF AREA "a"

HEAD ADDRESS (MARM 102)
(END ADDRESS)

NUMBER OF DATA
INDICATED BY TC 111

NUMBER OF DATA
INDICATED BY U/D
COUNTER

ADDRESS INDICATED
BY RWP 103

ADDRESS
INDICATED
BY MAR 101

DMA TRANSFER DATA

14

# FIGURE 4A

```
┌─────────────────────────────┐
│      DATA  INITIALIZING      │
│         PROCESSING           │
└─────────────────────────────┘
               │
               ▼                        401
┌─────────────────────────────┐
│  MARM102,MAR101,RP103 ◄──    │
│    HEAD  ADDRESS  OF  DMA    │
│       TRANSFER  AREA         │
└─────────────────────────────┘
               │
               ▼                        402
┌─────────────────────────────┐
│     TCM112,TC111 ◄──         │
│   "NUMBER  OF  DATA  TO      │
│    BE  TRANSFERRED" –1       │
└─────────────────────────────┘
               │
               ▼                        403
┌─────────────────────────────┐
│       COMP121 ◄──            │
│   "NUMBER  OF  DATA  TO      │
│    BE  TRANSFERRED" –2       │
└─────────────────────────────┘
               │
               ▼                        404
┌─────────────────────────────┐
│    U/D  COUNTER120 ◄──  0    │
└─────────────────────────────┘
               │
               ▼                        405
┌─────────────────────────────┐
│  COMP105,MARE106 ◄──         │
│    "END  ADDRESS  OF  DMA    │
│      TRANSFER  AREA" –1      │
└─────────────────────────────┘
               │
               ▼                        406
┌─────────────────────────────┐
│     ENABLE  TO  START  DMA   │
└─────────────────────────────┘
               │
               ▼
          ┌─────────┐
          │   END   │
          └─────────┘
```

15

# FIGURE 4B

```
        ( DATA READ PROCESSING )
                   │
                   ▼
        ┌──────────────────────────┐  401
        │ READ VALUE OF U/D COUNTER 120 │
        └──────────────────────────┘
                   │
                   ▼
              ╱───────────╲       411
             ╱  U/D COUNTER ╲        YES
            ╱    120 =0?     ╲──────────┐
             ╲              ╱           │
              ╲───────────╱            │
                   │ NO                │
      ┌────────────▼──────────┐        │
      │            ▼           │       │
      │  ┌──────────────────────┐ 412  │
      │  │ MEMORY READ ACCESS USING │   │
      │  │  CONTENT OF PR 103    │      │
      │  └──────────────────────┘       │
      │            │                    │
      │            ▼                     │
      │  ┌──────────────────────┐ 413   │
      │  │   PROCESS READ-OUT    │       │
      │  │   TRANSFER DATA       │       │
      │  └──────────────────────┘        │
      │            │                     │
      │            ▼                      │
      │      ╱──────────────╲      414    │
      │ NO  ╱ DATA OF NUMBER ╲           │
      └────╱ INDICATED BY U/D ╲          │
           ╲ COUNTER 120 HAS BEEN ╱      │
            ╲   READ OUT?   ╱            │
             ╲─────────────╱             │
                   │ YES                 │
                   ◄─────────────────────┘
                   ▼
                ( END )
```

# FIGURE 5A

ENABLE TO START DMA

501 — DMA RQ 30 =ACTIVE?
NO / YES

502 — BUS BUSY SIGNAL 15 = ACTIVE

504 — DMA AK 31 = ACTIVE

505 — EXECUTE MEMORY WRITE ACCESS BASED ON CONTENT OF MAR 101

506 — INCREMENT CONTENT OF MAR 101

507 — COUNT UP U/D COUNTER 120

508 — DECREMENT CONTENT OF TC 111

509 — IS BORROW GENERATED FROM DEC 110?
YES / NO

510 — TC 111 ← TCM 112
MAR 101 ← MARM 102

511 — DMA RQ 30 = ACTIVE?
YES / NO

512 — BUS BUSY SIGNAL 15 = INACTIVE

17

# FIGURE 5B

# FIGURE 6

MICROCOMPUTER 601

PERIPHERAL DEVICE 6

PERIPHERAL DEVICE 3

ADDRESS BUS 5A
DATA BUS 5B
CONTROL BUS 5C

BUS

CPU 610

ADC 200

620

LATCH A

614

MAR 201
U/D REG. 220
COMP 221

TC 211
TCM 212
RWP 203

228

CONTROL UNIT

225

30

31

MEMORY

DMA TRANSFER AREA

20   21

EXECUTION UNIT

612

BUS BUSY SIGNAL 615

616   BUS CYCLE REQUEST

611   BUS CONTROLLER   217

EP 0 503 390 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 410 382 (NEC CORPORATION) 30 January 1991<br>* page 3, column 3, line 36 - page 4, column 5, line 5; figures 1-3,6-9,12,13 *<br>--- | 1,2 | G06F13/28 |
| A | EP-A-0 169 577 (HITACHI LTD.) 29 January 1986<br>* page 3, line 32 - page 5, line 11; figure 1 *<br>--- | 1,2 | |
| A | EP-A-0 373 393 (NEC CORPORATION)<br>* page 4, line 28 - page 5, line 40; figures 2,3,4 *<br>--- | 1,2 | |
| A | EP-A-0 055 623 (FUJITSU LIMITED)<br>* page 7, line 11 - page 12, line 6; figures 4,6 *<br><br>----- | 1,2 | |
| | | | TECHNICAL FIELDS SEARCHED (Int. Cl.5 )<br><br>G06F |

The present search report has been drawn up for all claims

| Place of search | Date of completion of the search | Examiner |
|---|---|---|
| THE HAGUE | 29 JUNE 1992 | JONES H.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)